# EUROPÄISCHE PATENTANMELDUNG

(11) **EP 0 628 338 A1**
(43) Veröffentlichungstag der Anmeldung: **14.12.1994**
(21) Anmeldenummer: 94108170.5
(22) Anmeldetag: 27.05.1994
(51) Int. Cl.: B01D 53/34, B01D 53/36, B60H 3/06, B60P 3/00

(54) **Verfahren zur physikalischen und chemischen Reinigung der Aussenluft**

(30) Priorität: 05.06.1993 DE 4318738
(71) Anmelder: Lang von Langen, Ursula, D-83677 Greiling (DE); Dietz, Claus, D-91778 Pappenheim-Papiermühle (DE)
(72) Erfinder: Lang von Langen, Ursula, D-83677 Greiling (DE); Dietz, Claus, D-91778 Pappenheim-Papiermühle (DE)
(74) Vertreter: Kessel, Egbert, Dipl.-Ing.

(57) **Zusammenfassung**

Die Erfindung betrifft ein Verfahren zur physikalischen und chemischen Reinigung der Außenluft unter Verwendung herkömmlicher Filter und/oder Katalysatoren. Ihr liegt die Aufgabe zugrunde, Möglichkeiten zur Reinigung der Außenluft zu schaffen, die bei geringem Energiebedarf von hoher Effektivität sind. Erfindungsgemäß wird die Aufgabe dadurch gelöst, daß als Träger der herkömmlichen Filter und/ oder Katalysatoren Kraftfahrzeuge verwendet werden, wobei die Filter und/oder Katalysatoren keinen für den Betrieb dieser Kraftfahrzeuge notwendigen Bestandteil darstellen und die angesaugte Außenluft nach erfolgter Reinigung unmittelbar an die Umgebung der Kraftfahrzeuge abgegeben wird.

## Beschreibung

Die Erfindung betrifft ein Verfahren zur physikalischen und chemischen Reinigung der Außenluft unter Verwendung herkömmlicher Filter und/oder Katalysatoren.

Die Luftverschmutzung nimmt ständig zu. Die bekanntesten Folgen dieses Phänomens sind: Waldsterben vor allem durch sauren Regen, Klimaverschiebungen durch Aufheizung der unteren Schichten der Atmosphäre und Zunahme der krebsauslösenden UV-Strahlung.

Hauptursache der Luftverschmutzung sind Autos, Kraftwerke und Industrieanlagen, deren Zahl - und damit die von ihnen verursachte Luftverschmutzung - infolge der Bevölkerungszunahme kontinuierlich wächst. Ihre Abgase verbinden sich in der Atmosphäre zu einem gefährlichen Gemisch, aus dem vor allem bei Sonnenschein das für Mensch, Tier und Pflanze gefährliche, extrem giftige Ozon entsteht.

Während die natürliche Ozonschicht in etwa 40 km Höhe durch aufsteigende Chlorfluorkohlenstoffe (Spraydosen, Kühlschränke, Klimaanlagen) ständig abgebaut wird, bildet sich infolge der Luftverschmutzung in der Troposphäre (= untere 20 km der Lufthülle) ein erhöhter Ozongehalt. Diese Umschichtung des Ozons führt dazu, daß die UV-Strahlung tiefer als bisher in die Atmosphäre eindringen kann und so die unteren Luftschichten klimaverändernd stärker erwärmt, daß die Photosynthese gebremst wird, was u.a. zu erheblichen Ernteverlusten führt, daß bei Mensch und Tier verstärkt Hautkrebs, Augen- und Schleimhautreizungen sowie Asthma auftritt u.v.a.m.

In der Vergangenheit ist daher versucht worden, den Gehalt der Aussenluft an Schadstoffen, insbesondere Ozonbildnern als welche vorrangig Stickoxyde in Verbindung mit Kohlenmonoxyd und Kohlenwasserstoffen angesehen werden, zu verringern. Dabei ist stets so vorgegangen worden, daß schadstoffmindernde Maßnahmen nur am Ort der Schadstoffentstehung durchgeführt werden.

Die bekannteste dieser Maßnahmen ist die Entgiftung der Autoabgase durch Katalysatoren. In diesem Zusammenhang ist auch die Rauchgasentgiftung bei Kohlekraftwerken und Industrieanlagen zu erwähnen. Wie brennend aktuell dieses Thema ist, verdeutlicht eine im Nachrichtenmagazin "Der Spiegel'' Heft 9/1993 erschienene Veröffentlichung, welche die Horrorvision eines 150 m hohen Luftreinigungsturms in Ballungsgebieten und Industriezonen zeichnet.

Trotz eines wachsenden Umweltbewußtseins haben diese Maßnahmen nicht ausgereicht, die ständige Zunahme der Luftverschmutzung zu bremsen oder auf Null zurückzuführen.

Der Erfindung liegt die Aufgabe zugrunde, Möglichkeiten der Außenluftreinigung zu schaffen, die bei geringem Energiebedarf von hoher Effektivität sind. Diese Aufgabe wird erfindungsgemäß dadurch gelöst, daß als Träger der herkömmlichen Filter und/oder Katalysatoren Kraftfahrzeuge verwendet werden, wobei die Filter und/oder Katalysatoren keinen für den Betrieb dieser Kraftfahrzeuge notwendigen Bestandteil darstellen und die angesaugte Außenluft nach erfolgter Reinigung unmittelbar an die Umgebung der Kraftfahrzeuge abgegeben wird.

Die Erfindung geht zunächst davon aus, daß Kraftfahrzeuge heute und in Zukunft unverzichtbar sind. Weiter gestaltet sie den bisherigen Umweltfeind Nr. 1, nämlich das Auto, zum Umweltfreund um, indem sie zusätzlich zu dem Katalysator zur Abgasentgiftung und dem Filter zur Reinigung der im Innenraum der Kraftfahrzeuge zugeführten Luft weitere Filter und/oder Katalysatoren vorsieht, die ausschließlich dafür bestimmt sind, während der Fahrt des Kraftfahrzeugs Außenluft zu reinigen und die gereinigte Luft sofort wieder der Außenluft zuzuführen. Schließlich erzielt sie durch die große Zahl der betriebenen Kraftfahrzeuge die hohe Effektivität des Luftreinigungsverfahrens.

Bei dem erfindungsgemäßen Verfahren wirkt jedes Kraftfahrzeug wie ein "Staubsauger'' bzw. "Schadstoffsauger". Es reduziert also nicht nur die Schadstoffe der Eigenverbrennung, sondern darüber hinaus die Schadstoffe der umgebenden Außenluft, wobei der ständige Ortswechsel dafür sorgt, daß stets neue schadstoffbelastete Außenluft zugeführt wird, was bei stationären Anlagen häufig nicht der Fall ist. Nachstehend ein Berechnungsbeispiel:

Bei Einsatz eines Gebläses, das etwa so viel Luft ansaugt, wie der Motor das Kraftfahrzeugs zur Verbrennung benötigt, ergibt sich bei einem Kraftfahrzeug mit einem Hubraum von 2.000 cm³ und einer durchschnittlichen Drehzahl von 3.200 upm ein Ansaugvolumen von 6.4 m³/min. Das macht bei 1.000 Kraftfahrzeugen innerhalb einer Stunde 384.000 m³ gereinigte Luft aus.

Unter dem Begriff Kraftfahrzeug können hier außer Personen- und Lastkraftwagen, Bussen und Nutzfahrzeugen auch Schiffe und Flugzeuge verstanden werden. Durch die mit dem erfindungsgemäßen Verfahren erzielbare Reinigung der Außenluft lassen sich insbesondere die folgenden Vorteile erzielen:
1. Erfassung der Abgase auch anderer Kraftfahrzeuge zwecks Durchführung eines erstmaligen oder weiteren Reduktionsprozesses.
2. Verbesserung der Atemluft durch Verminderung der Giftstoffanteile.
3. Herabsetzung des Krebsrisikos sowie der Zahl der Atemwegerkrankungen und Giftstoffallergien.
4. Senkung der Schadstoffbelastung der menschlichen Nahrungsmittelkette und des Grundwassers.
5. Erhaltung nützlicher Mikroorganismen.
6. Verringerung der Gefahr von Smog und saurem Regen, dadurch Gesunderhaltung des Waldes und entsprechend höhere Sauerstofferzeugung durch verbesserte Photosynthese.
7. Aufgrund verbesserter Photosynthese Verminderung des Treibhauseffekts.
8. Reduzierung der Zersetzung an (historischen) Bauwerken.

In weiterer Ausgestaltung der Erfindung werden in den Strömungsweg der angesaugten Außenluft mehrere Reinigungsstufen eingeschaltet, wobei zweckmäßigerweise zunächst eine mechanische und dann eine chemische Filterung vorgesehen wird. In der mechanischen Filterung werden bsp. mittels auswechselbarer Papierfilter Staub, Ruß und Kleinstpartikel ausgeschieden, welche die anschließende chemische Filterung nicht mehr belasten.

Es hat sich als vorteilhaft erwiesen, wenn als chemische Filterung entweder ein Aktivkohlefilter oder Katalysatoren, insbesondere Platin-Rhodium- oder Vanadiumkatalysatoren, eingesetzt werden, wobei die Katalysatoren von der Abwärme der Motorabgase beaufschlagt werden.

## Patentansprüche

1. Verfahren zur physikalischen und chemischen Reinigung der Außenluft unter Verwendung herkömmlicher Filter und/oder Katalysatoren, **dadurch gekennzeichnet**, daß als Träger der herkömmlichen Filter und/oder Katalysatoren Kraftfahrzeuge verwendet werden, wobei die Filter und/oder Katalysatoren keinen für den Betrieb dieser Kraftfahrzeuge notwendigen Bestandteil darstellen und die angesaugte Außenluft nach erfolgter Reinigung unmittelbar an die Umgebung der Fahrzeuge abgegeben wird.

2. Verfahren nach Anspruch 1, **dadurch gekennzeichnet**, daß in den Strömungsweg der angesaugten Außenluft mehrere Reinigungsstufen eingeschaltet werden.

3. Verfahren nach Anspruch 2, **dadurch gekennzeichnet**, daß zunächst eine mechanische und dann eine chemische Filterung vorgesehen wird.

4. Verfahren nach Anspruch 3, **dadurch gekennzeichnet**, daß als chemische Filterung ein Aktivkohlefilter eingesetzt wird.

5. Verfahren nach Anspruch 3, **dadurch gekennzeichnet**, daß als chemische Filterung Katalysatoren, insbesondere Platin-Rhodium- oder Vanadiumkatalysatoren, eingesetzt werden.

6. Verfahren nach Anspruch 5, **dadurch gekennzeichnet**, daß die Katalysatoren von der Abwärme der Motorabgase beaufschlagt werden.
